# EUROPÄISCHE PATENTSCHRIFT

(11) **EP 2 604 866 B1**
(45) Veröffentlichungstag und Bekanntmachung des Hinweises auf die Patenterteilung: **30.11.2016**
(21) Anmeldenummer: 11193234.9
(22) Anmeldetag: 13.12.2011
(51) Int. Cl.: F15D 1/00, F01D 5/18

(54) **Verfahren und System zur Reduzierung von Strömungsverlusten sowie Strömungsmaschine**
Method and system for reducing flow losses and fluid flow engine
Procédé et système de réduction des pertes de charge et turbomachine

(43) Veröffentlichungstag der Anmeldung: 19.06.2013
(73) Patentinhaber: MTU Aero Engines AG, 80995 München (DE)
(72) Erfinder: Dr. Bayer, Erwin, 85221 Dachau (DE); Dr. Hiller, Sven, 85244 Röhrmoos (DE); Geiger, Peter, 80997 München (DE); Heß, Thomas, 81541 München (DE)

(56) Entgegenhaltungen:
- WO-A2-2004/048871
- DE-A1- 10 244 199
- DE-A1-102009 039 769
- GB-A- 2 438 861
- US-B2- 7 820 267

## Beschreibung

Die Erfindung betrifft ein Verfahren zur Reduzierung von Strömungsverlusten nach dem Oberbegriff des Patentanspruchs 1, ein System zur Durchführung eines derartigen Verfahrens sowie eine Strömungsmaschine mit einem derartigen System.

Grundsätzlich führt eine mit einer Strömung in Kontakt kommende Oberfläche zu einer Erhöhung des Strömungswiderstandes. Bei Heißgasströmungen, wie sie bspw. in einem Flugzeugtriebwerk auftreten, tritt zudem beim Kontakt mit einer kalten Kanalwandung ein verstärkter Wärmeübertrag in Richtung der Kanalwandung auf. Zur Reduzierung der Strömungsverluste und des Wärmeübertrages sind passive Elemente wie rippenartige Erhebungen oder kuhlenartige Vertiefungen bekannt. Die optimale Wirkung dieser passiven Elemente ist jedoch nur bei einer bestimmten Geometrie und bei einer bestimmten Strömungsgeschwindigkeit gegeben. Bei abweichenden Bedingungen kann der Strömungswiderstand deutlich erhöht werden. Zudem sind aktive Elemente in Form von Mikro- bzw. Zusatzströmen bekannt, die im Wandungsbereich seitlich ausgeblasen werden und einen Kühlfilm bilden, mittels dem die Heißgasströmung von der Kanalwandung beabstandet wird. Derartige aktive Elemente sind beispielhaft in der DE 10 244 199 A1, WO 2004/048871 A2, GB 2 438 861 A und in der US 7,820,267 B2 gezeigt. Nachteilig an diesen bekannten aktiven Verfahren ist jedoch, dass insbesondere im Bereich von stark gekrümmten Flächen häufig undefinierte Wirbel entstehen, die die Hauptströmung negativ beeinflussen, was in einem reduzierten Wirkungsgrad des Flugzeugtriebwerks resultiert.

Ein Verfahren gemäß dem Oberbegriff von Anspruch 1 und ein System gemäß dem Oberbegriff von Anspruch 7 sind aus der DE 10 2009 039 769 A1 bekannt.

Aufgabe der Erfindung ist es, ein Verfahren zur Reduzierung von Strömungsverlusten einer entlang einer Oberfläche strömenden Strömung, das die vorgenannten Nachteile beseitigt und bei stark gekrümmten Flächen anwendbar ist, sowie ein System zur Durchführung eines derartigen Verfahrens zu schaffen. Des Weiteren ist es Aufgabe der Erfindung, eine effiziente Strömungsmaschine zu schaffen.

Diese Aufgabe wird gelöst durch ein Verfahren mit den Merkmalen des Patentanspruchs 1, durch ein System mit den Merkmalen des Patentanspruchs 7 sowie durch eine Strömungsmaschine mit den Merkmalen des Patentanspruchs 14.

Bei einem erfindungsgemäßen Verfahren zur Reduzierung von Strömungsverlusten einer entlang einer Oberfläche strömenden Strömung wird eine Vielzahl von stationären Zusatzströmen seitlich aus der Oberfläche ausgeblasen. Erfindungsgemäß werden durch die Zusatzströme ein Wirbelfeld mit einer Vielzahl von oberflächenseitigen lokalen Tragwirbeln gebildet, mittels derer die Strömung im Bereich des Wirbelfeldes von der Oberfläche beabstandet wird.

Das erfindungsgemäße Verfahren ermöglicht eine Reduzierung des Strömungswiderstandes der Strömung entlang der Oberfläche. Wenn beispielsweise die Oberfläche eine Kanalwandung eines von einer Hauptströmung durchströmten Kanals einer Strömungsmaschine wie ein Flugzeugtriebwerk bildet, kann der Strömungswiderstand über einen im Vergleich zum Stand der Technik größeren Bereich der Strömungsgeschwindigkeit der Hauptströmung reduziert werden. Damit können wesentlich stärkere Krümmungen wie z.B. bei einem Übergangsrohr ohne zusätzliche Verluste realisiert werden. Dies führt zu einer Verkürzung des Übergangsrohrs und damit zu einer Verkürzung des Flugzeugtriebwerks bei reduziertem Gewicht. Die Hauptströmung wird hierbei nahezu verlustfrei geführt. Die thermischen Verluste sind ebenfalls reduziert, da mittels des Wirbelfeldes die heiße Hauptströmung von der Kanalwandung beabstandet wird und somit die Gastemperatur angehoben werden kann, ohne dass Überhitzungen im Bereich der Kanalwandung zu befürchten sind. Hierdurch lassen sich ebenfalls thermische Effekte im Flugzeugtriebwerk wie beim Verzug einzelner Komponenten oder Spannungen reduzieren, wodurch die Lebensdauer der Komponenten deutlich verlängert werden kann. Zudem führen die lokalen Tragwirbel zu einer Reduzierung der auf die Struktur einwirkenden Kräfte und damit zu einer Verlängerung der Lebensdauer und zu einer weiteren Verringerung des durch Strukturschwingungen angeregten Lärms. Dabei ist durch die Induzierung der lokalen Tragwirbel der Überdruck des eingedüsten Zusatzfluids sehr gering und damit auch der Verbrauch des Zusatzfluids.

Das erfindungsgemäße Verfahren kann grundsätzlich in jedem Bereich des Flugzeugtriebwerks eingesetzt werden. So kann es bereits im vorderen Bereich bei Fanschaufeln, im mittleren Bereich bei Gehäuseverkleidungen oder im hinteren Bereich bei Mischerblüten und Schubumkehrklappen eingesetzt werden. Bei den Mischerblüten kann das erfindungsgemäße Verfahren zudem die Vermischung der heißen Hauptströmung mit einer kalten Sekundärströmung verbessern und somit zu einer deutlichen Lärmreduzierung führen. Wenn die induzierten Tragwirbel an einer Hinterkante von Strömungsprofilen wie Schaufeln integriert werden, kann das Abströmverhalten und die Größe von Nachlaufwirbeln positiv beeinflusst werden. Das Verfahren ist dabei derart stabil, dass es sowohl im Flug als auch stationär betreiben werden kann.

Die Stabilität der einzelnen Tragwirbel kann verbessert werden, wenn jeder Zusatzstrom einen Tragwirbel bildet.

Um zu verhindern, dass durch die Zusatzströme eine Gegenströmung zur Strömung induziert wird, ist es vorteilhaft, wenn die Zusatzströme schräg in Strömungsrichtung der Strömung aus der Oberfläche bzw. in den Kanal eingeblasen werden. Hierdurch sind die Tragwirbel im von der Oberfläche bzw. der Kanalwandung entfernten Innenbereich parallel zur Strömung orientiert, wodurch zudem eine Verwirbelung mit der Strömung und somit ein Energieentzug der Strömung verhindert wird.
Die Stabilität des Verfahrens lässt sich verbessern, wenn die Ausblasgeschwindigkeit der Zusatzströme variiert werden kann. Bevorzugerweise ist die Ausblasgeschwindigkeit derart gewählt, dass ein Zusammenbrechen der Tragwirbel verhindert wird.

Zur Reduzierung eines Regel- und Steueraufwand der Zusatzströme werden bei einem Ausführungsbeispiel die Zusatzströme kontinuierlich aus der Oberfläche ausgeblasen bzw. in den Kanal eingeleitet.

Zur Reduzierung einer benötigten Zusatzfluidmenge zur Ausbildung der Zusatzströme werden bei einem anderen Ausführungsbeispiel die Zusatzströme impulsartig aus der Oberfläche ausgeblasen bzw. in den Kanal eingeleitet.

Ein erfindungsgemäßes System zur Reduzierung von Strömungsverlusten einer entlang einer Oberfläche strömenden Strömung hat eine Vielzahl von in die Oberfläche einzubringenden Vertiefungen und eine Vielzahl von Ausblasöffnungen zum Ausblasen jeweils eines Zusatzstroms aus der Oberfläche, die jeweils im Randbereich stromaufwärts der Vertiefungen angeordnet sind.

Das erfindungsgemäße System ermöglicht die Bildung eines Wirbelfeldes mit einer Vielzahl von lokalen Tragwirbeln. Die Vertiefungen wirken dabei als lokale bzw. stationäre Wirbelzonen, in denen die Tragwirbel ausgebildet und sicher geführt werden. Die Tragwirbel sind über die Form der Vertiefungen, deren Verteilung und den Durchsatz der Ausblasöffnungen genau beschreibbar, so dass die Tragwirbel exakt dosiert und somit der Strömungswiderstand der Strömung genau kontrolliert und bedarfsgerecht über die induzierte Fluidmenge steuerbar sind. Die Vertiefungen sowie die Ausblasöffnungen können durch generative oder additive Verfahren bequem hergestellt werden. Sie können auch konventionell wie z.B. gleichzeitig bei der Herstellung durch Gießen oder nachträglich durch ein geeignetes Verfahren wie Laserbohren oder Laserablation mittels eines Hochenergiestrahls hergestellt werden.

Bevorzugterweise haben die Ausblasöffnungen eine größere Erstreckung in Querrichtung der Strömung als in Längsrichtung der Strömung. Sie sind somit schlitzartig und können als einzelne Öffnungen oder durch eine Vielzahl von Kleinstöffnungen gebildet sein. Die Kleinstöffnungen können zum Beispiel Bohrungen sein, die derart eng nebeneinanderliegend angeordnet sind, dass der Eindruck einer einzelnen schlitzartigen Ausblasöffnung entsteht.

Zur Stabilisierung der Tragwirbel können die Vertiefungen derart voneinander beabstandet sein, dass keine gegenseitige Beeinflussung von sich in den Vertiefungen ausbildenden Tragwirbel erfolgt.

Bei einem Ausführungsbeispiel haben die Vertiefungen eine mehrfach gewölbte Bodenfläche mit einem kreisartigen Randbereich. Derartige muldenartige Vertiefungen verhindern ein Ausweichen der Tragwirbel und ermöglichen somit ein stabiles Wirbelfeld.

Dabei ist es zur weiteren Stabilisierung der Tragwirbel vorteilhaft, wenn sich die Ausblasöffnungen endseitig verjüngen und somit sichelartig ausgebildet sind.

Um mit einer minimalen Anzahl von Vertiefungen und Ausblasöffnungen eine maximale Quererstreckung des Wirbelfeldes zu erreichen, können die Vertiefungen in hintereinander liegenden alternierenden Reihen jeweils quer zur Strömungsrichtung der Strömung orientiert sein.

Bei einem alternativen Ausführungsbeispiel haben die Vertiefungen zu Bildung eines stabilen Wirbelfeldes einen rinnenartigen Querschnitt und die Ausblasöffnungen sind in sich in Querrichtung der Strömung erstreckenden Düsenleisten ausgebildet.

Eine erfindungsgemäße Strömungsmaschine weist ein erfindungsgemäßes System auf und zeichnet sich hierdurch durch einen hohen Wirkungsgrad und somit durch eine verbesserte Effizienz aus. Beispielsweise ist das System innerhalb der Strömungsmaschine, insbesondere bei Flugzeugtriebwerken in Ausströmkanälen von Radialverdichtern, in Hochdruckturbinenschaufeln, in Gehäuseabschnitten oder im Mischer integriert. Außerhalb des Flugzeugtriebwerks kann das System z.B. in Abgaskrümmern integriert sein.

Bei Hochdruckturbinenschaufeln kann das System bzw. das Verfahren herkömmliche Ausblastrichter ersetzen. Bei diesen ist das Strömungsbild generell sehr stark von dem Strömungsverhalten der Heißgasströmung abhängig. Der Kühlfilm kann abreißen und die Kühlwirkung wird z.B. im Bereich der Hinterkante stark eingeschränkt. Durch die erfindungsgemäße Lokalisierung der induzierten Tragwirbel kann der Kühlfilm jedoch über die gesamte Schaufelfläche lokal fixiert werden und somit die notwendige Kühlluftmenge deutlich reduziert werden. Zudem kann durch eine geeignete Gestaltung der Ausblasöffnungen und der Vertiefungen auf der Konvexseite der Schaufel ein Ablösepunkt der Schaufel genau fixiert und damit kontrollierbar gemacht werden.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
Figur 1 einen Teilschnitt durch eine Kanalwandung eines von einer Hauptströmung durchströmten Kanals, in der ein erfindungsgemäßes System integriert ist, und
Figur 2 eine Draufsicht auf einen Abschnitt der Kanalwandung.

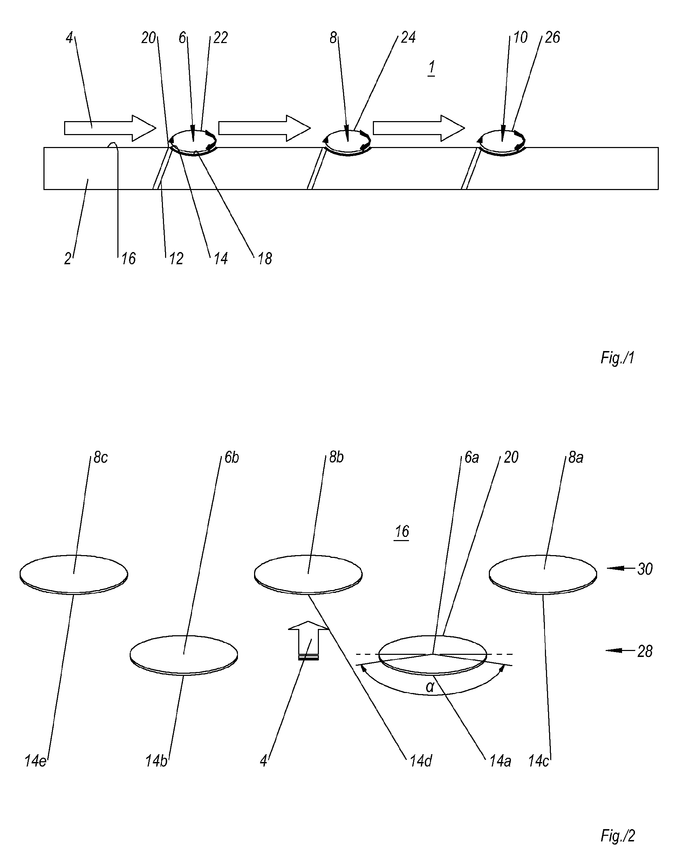

Figur 1 zeigt einen Teilschnitt durch einen Kanal 1, der von einer Oberfläche bzw. Kanalwandung 2 in Umfangsrichtung begrenzt ist. In dem Kanal 1 ist eine Strömung bzw. Hauptströmung 4 ausgebildet, die sich gemäß der Orientierung der Pfeile in Figur 1 von links nach rechts erstreckt. Der Kanal 1 ist beispielsweise ein in einem Flugzeugtriebwerk ausgebildeter Heißgaskanal und die Hauptströmung 4 ist eine den Kanal 1 durchströmende Heißgasströmung.

Zur Reduzierung von Strömungsverlusten der Hauptströmung 4 sowie zur Reduzierung eines Wärmeübergangs von der heißen Hauptströmung 4 auf die kalte Kanalwandung 2 ist in der Kanalwandung 2 ein System mit einer Vielzahl von Vertiefungen 6, 8, 10 sowie mit einer Vielzahl von mit jeweils einer Zuleitung 12 zusammenwirkenden Ausblasöffnungen 14 integriert.

Die Vertiefungen 6, 8, 10 sind jeweils in eine den Strömungsquerschnitt des Kanals 1 begrenzende Oberfläche 16 der Kanalwandung 2 eingebracht und haben eine muldenartige Form mit einer mehrfach gekrümmten Bodenfläche 18, die mit der Oberfläche 16 jeweils einen umlaufenden Randbereich 20 definiert.

Die Ausblasöffnungen 14 sind jeweils in den Randbereichen 20 stromaufwärts der Vertiefungen 6, 8, 10 integriert.

Die Zuleitungen 12 stehen mit einem nicht gezeigten Gebläse in Fluidverbindung und ermöglichen somit das Ausblasen eines Zusatzstroms durch die Ausblasöffnungen 14 schräg in Strömungsrichtung der Hauptströmung 4. Die Zusatzströme treten mit einem geringen Überdruck aus den Ausblasöffnungen 14 aus und induzieren in den Vertiefungen 6, 8, 10 jeweils einen lokalen Tragwirbel 22, 24, 26.

Wie in Figur 2 gezeigt, sind die Vertiefungen 6 bzw. 6a, 6b und 8 bzw. 8a, 8b, 8c quer zur Hauptströmung 4 in alternierenden Reihen 28, 30 angeordnet. Sie haben jeweils einen kreisartigen, insbesondere einen ovalen oder elliptischen Randbereich 20 und sind entsprechend ihrer Reihenanordnung quer zur Hauptströmung 4 orientiert. Die Vertiefungen 6a, 6b, 8a, 8b, 8c sind jeweils derart voneinander beabstandet, dass keine gegenseitige Beeinflussung der Tragwirbel 22, 24, 26 erfolgt

Die Ausblasöffnungen 14 bzw. 14a, 14b, 14c, 14d, 14e sind schlitzartig und insbesondere sichelartig mit sich verjüngenden Endabschnitten ausgebildet. Sie umspannen einen Bogenabschnitt des Randbereichs 20 der so gewählt ist, dass die Zusatzströme nicht seitlich an den Vertiefungen 6a, 6b, 8a, 8b, 8c vorbeigeführt werden können. Insbesondere umspannen sie einen stromaufwärtigen Bogenabschnitt des Randbereichs 20 mit einem Bogenwinkel α≤180°.

Zur Reduzierung des Strömungsverlustes der Hauptströmung 4 und zur Reduzierung eines Wärmeübergangs von der heißen Hauptströmung 4 auf die kalte Kanalwandung 2 werden die Zusatzströme mit leichtem Überdruck durch die Ausblasöffnungen 14 schräg in Strömungsrichtung der Hauptströmung 4 geführt. Die Vertiefungen 6, 8, 10 definieren jeweils eine stationäre Wirbelzone, in denen durch die Zusatzströme jeweils ein lokaler Tragwirbel 22, 24, 26 induziert wird. Die Tragwirbel 22, 24, 26 sind dabei im von der Kanalwandung 2 entfernten Innenbereich des Kanals 1 in Strömungsrichtung und somit quasi parallel zur Hauptströmung 4 und im Außenbereich des Kanals 1 bzw. im Bodenflächenbereich der Vertiefungen 6, 8, 10 entgegengesetzt zur Hauptströmung 4 und somit quasi als Gegenströmung orientiert. Die Tragwirbel 22, 24, 26 bilden in ihrer Gesamtheit ein Wirbelfeld, das die Hauptströmung 4 trägt und diese somit von der Kanalwandung 2 beabstandet wird, wodurch sowohl der Strömungswiderstand der Hauptströmung 4 als auch der Wärmeübertrag der Hauptströmung 4 in die Kanalwandung 2 reduziert wird. Zur Reduzierung einer benötigten Zusatzfluidmenge werden die Zusatzströme derart impulsartig in den Kanal 1 und mit einer derartigen variabel einstellbaren Geschwindigkeit ausgeblasen, dass ein Zusammenbrechen der Tragwirbel 22, 24, 26 verhindert wird. Als Zusatzfluid wird bevorzugterweise ein gasförmiges Medium wie Luft verwendet, jedoch sind auch andere Medien wie Flüssigkeiten vorstellbar.

Offenbart ist ein Verfahren zur Reduzierung von Strömungsverlusten einer entlang einer Oberfläche strömenden Strömung, bspw. eine Hauptströmung entlang einer Kanalwandung einer Strömungsmaschinen, wobei eine Vielzahl von stationären Zusatzströmen seitlich aus der Oberfläche ausgeblasen werden, und wobei durch die Zusatzströme ein Wirbelfeld mit einer Vielzahl von oberflächenseitigen lokalen Tragwirbeln gebildet wird, mittels denen die Strömung im Bereich des Wirbelfeldes von der Oberfläche beabstandet wird, ein System mit einer Vielzahl von in eine Oberfläche einzubringenden Vertiefungen und mit einer Vielzahl von Ausblasöffnungen zum Ausblasen jeweils einer Zusatzströmung aus der Oberfläche, die jeweils im Randbereich stromaufwärts der Vertiefungen angeordnet sind, sowie eine Strömungsmaschine mit einem derartigen System.

### Bezugszeichenliste

- 1: Kanal
- 2: Kanalwandung / Oberfläche
- 4: Hauptströmung / Strömung
- 6, a, b: Vertiefung
- 8, a, b, c: Vertiefung
- 10: Vertiefung
- 12: Zuleitung
- 14, a, b, c, d ,e: Ausblasöffnung
- 16: Oberfläche
- 18: Bodenfläche
- 20: Randbereich
- 22: Tragwirbel
- 24: Tragwirbel
- 26: Tragwirbel
- 28: Reihe
- 30: Reihe
- α: Bogenwinkel

## Patentansprüche

1. Verfahren zur Reduzierung von Strömungsverlusten einer entlang einer Oberfläche (2) strömenden Strömung (4), wobei eine Vielzahl von stationären Zusatzströmen seitlich aus der Oberfläche (2) ausgeblasen werden und zwar aus Ausblasöffnungen (14), die jeweils im Randbereich (20) von in die Oberfläche 2 eingebrachten Vertiefungen (6 8, 10) angeordnet sind, **dadurch gekennzeichnet, dass** die Ausblasöffnungen (14) jeweils im Randbereich (20) stromaufwärts der Vertiefungen (6, 8, 10) angeordnet sind, so dass durch die Zusatzströme ein Wirbelfeld mit einer Vielzahl von oberflächenseitigen lokalen Tragwirbeln (22, 24, 26) gebildet wird, mittels derer die Strömung (4) im Bereich des Wirbelfelds von der Oberfläche (2) beabstandet wird.

2. Verfahren nach Anspruch 2, wobei durch jeden Zusatzstrom ein Tragwirbel (22, 24, 25) gebildet wird.

3. Verfahren nach Anspruch 1 oder 2, wobei die Zusatzströme schräg in Strömungsrichtung der Strömung (4) eingeblasen werden.

4. Verfahren nach Anspruch 1, 2 oder 3, wobei eine Ausblasgeschwindigkeit der Zusatzströme variiert wird.

5. Verfahren nach Anspruch 4, wobei die Zusatzströme kontinuierlich ausgeblasen werden.

6. Verfahren nach einem der Ansprüche 4, wobei die Zusatzströme impulsartig ausgeblasen werden.

7. System zur Durchführung eines Verfahrens nach einem der vorhergehenden Ansprüche zur Reduzierung von Strömungsverlusten einer entlang einer Oberfläche (2) strömenden Strömung (4) mit einer Vielzahl von in die Oberfläche (2) eingebrachten Vertiefungen (6, 8, 10) und mit einer Vielzahl von Ausblasöffnungen (14) zum Ausblasen jeweils einer Zusatzströmung aus der Oberfläche (2), dadurch gekennzeichet dass die Ausblasöffnungen jeweils im Randbereich (20) stromaufwärts der Vertiefungen (6, 8, 10) angeordnet sind.

8. System nach Anspruch 7, wobei die Ausblasöffnungen (14) schlitzartig sind.

9. System nach Anspruch 7 oder 8, wobei die Vertiefungen (6, 8, 10) derart voneinander beabstandet sind, dass keine gegenseitige Beeinflussung von sich in den Vertiefungen (6, 8, 10) ausbildenden Tragwirbeln (22, 24, 26) erfolgt.

10. System nach Anspruch 7, 8 oder 9, wobei die Vertiefungen (6, 8, 10) eine mehrfach gewölbte Bodenfläche (18) und einen kreisartigen Randbereich (20) haben.

11. System nach Anspruch 10, wobei die Vertiefungen (6, 8, 10) in alternierenden Reihen (28, 30) jeweils quer zur Strömungsrichtung der Strömung (4) orientiert sind.

12. System nach einem der Anspruch 7 bis 11, wobei die Ausblasöffnungen (14) sichelartig sind.

13. System nach Anspruch 7, 8 oder 9, wobei die Vertiefungen (6, 8, 10) einen rinnenartigen Querschnitt haben und die Ausblasöffnungen (14) in sich in Querrichtung erstreckenden Düsenleisten angeordnet sind.

14. Strömungsmaschine mit einem System (6, 8, 10, 12, 14) nach einem der Ansprüche 7 bis 13.

## Claims

1. A method for reducing flow losses of a current (4) flowing along a surface (2), wherein a multitude of stationary additive flows are blown out laterally from the surface (2) and namely from exhaust openings (14) which are each arranged on the border area (20) of depressions (6, 8 10) introduced into the surface (2), **characterized in that** the exhaust openings (14) each are arranged on the border area (20) upstream of the depressions (6, 8 10), so that a cyclic field is formed by the additive flows with a multitude of surface-side local carrier swirls (22, 24, 26), by means of which the current (4) is spaced away from the surface (2) in the cyclic field area.

2. The method according to claim 2, wherein a carrier swirl (22, 24, 26) is formed by every additive flow.

3. The method according to claim 1 or 2, wherein the additive flows are blow out diagonally in the flow direction of the current (4).

4. The method according to claim 1, 2 or 3, wherein an exhaust velocity of the additive flows is varied.

5. The method according to claim 4, wherein the additive flows are continuously blown out.

6. The method according to one of the claims X to 4, wherein the additive flows are blown out in pulses.

7. A system for conducting a method according to one of the preceding claims for reducing flow losses of a current (4) flowing along a surface (2) with a multitude of depressions (6, 8, 10) introduced into the surface (2) and with a multitude of exhaust openings (14) each for blowing out an additive flow from the surface (2),
**characterized in that** the exhaust openings are arranged on the border area (20) upstream of the depressions (6, 8, 10).

8. The system according to claim 7, wherein the exhaust openings (14) are silt-like.

9. The system according to claim 7 or 8, wherein the depressions (6, 8, 10) are spaced from one another in such a way that no mutual interference takes place between the carrier swirls (22, 24, 26) forming in the depressions (6, 8 10).

10. The system according to claim 7, 8 or 9, wherein the depressions (6, 8, 10) have a double-curved floor area (18) and a circular border area (20).

11. The system according to claim 10, wherein the depressions (6, 8, 10) are each oriented transversely to the flow direction of the current (4) in alternating rows (28, 30).

12. The system according to one of the claims 7 to 11, wherein the exhaust openings (14) are sickle-shaped.

13. The system according to claim 7, 8 or 9, wherein the depressions (6, 8, 10) have a channel-like cross section and the exhaust openings (14) are arranged in nozzle plates extending transversely.

14. Fluid flow engine with a system (6, 8, 10, 12, 14) according to one of the claims 7 to 13.

## Revendications

1. Procédé de réduction de pertes de charge d'une charge en écoulement (4) le long d'une surface (2), une multitude de flux stationnaires supplémentaires étant soufflés latéralement à partir de la surface (2), notamment à partir d'ouvertures de soufflerie (14) qui sont respectivement disposées en périphérie (20) des cavités (6, 8, 10) intégrées dans la surface (2), **caractérisé en ce que** les ouvertures de soufflerie (14) sont respectivement disposées en périphérie (20) en amont du flux des cavités (6, 8, 10), de sorte qu'un champ rotatif doté d'une multitude de tourbillons porteurs locaux (22, 24, 26) côté surface se forme du fait des flux supplémentaires, au moyen desquels la charge (4) au niveau du champ rotatif est (2) écartée de la surface.

2. Procédé selon la revendication 2, un tourbillon porteur (22, 24, 26) étant formé par chaque flux supplémentaire.

3. Procédé selon la revendication 1 ou 2, les flux supplémentaires étant soufflés obliquement dans la direction de charge de la charge (4).

4. Procédé selon la revendication 1, 2 ou 3, une vitesse de soufflerie des flux supplémentaires pouvant varier.

5. Procédé selon la revendication 4, les flux supplémentaires étant soufflés en continu.

6. Procédé selon l'une des revendications 4, les flux supplémentaires étant soufflés par impulsions.

7. Système pour la réalisation d'un procédé selon l'une des revendications précédentes visant à réduire les pertes de charge d'une charge en écoulement (4) le long d'une surface (2) dotée d'une multitude de cavités (6, 8, 10) intégrées dans la surface (2) et dotée d'une multitude d'ouvertures de soufflerie (14) pour souffler respectivement un flux supplémentaire à partir de la surface (2), **caractérisé en ce que** les ouvertures de soufflerie sont respectivement disposées dans la périphérie (20) en amont du flux des cavités (6, 8, 10).

8. Système selon la revendication 7, les ouvertures de soufflerie (14) étant en forme de fentes.

9. Système selon la revendication 7 ou 8, les cavités (6, 8, 10) étant espacées les unes des autres de sorte à ce qu'aucune influence réciproque ne se produise dans les tourbillons porteurs (22, 24, 26) en formation dans les cavités (6, 8, 10).

10. Système selon la revendication 7, 8 ou 9, les cavités (6, 8, 10) possédant une surface de fond courbée plusieurs reprises (18) et une périphérie en forme de cercle (20).

11. Système selon la revendication 10, les cavités (6, 8, 10) étant orientées en lignes alternées (28, 30), respectivement la transversale de la direction de charge de la charge (4).

12. Système selon l'une des revendications 7 à 11, les ouvertures de soufflerie (14) étant en forme de demi-lune.

13. Système selon la revendication 7, 8 ou 9, les cavités (6, 8, 10) possédant une section transversale en forme de gouttière et les ouvertures de soufflerie (14) étant disposées sur des barrettes à buse s'étendant en direction transversale.

14. Turbomachine dotée d'un système (6, 8, 10, 12, 14) selon l'une des revendications 7 à 13.
